# EUROPEAN PATENT APPLICATION

(11) **EP 4 745 791 A1**
(43) Date of publication of application: **20.05.2026**
(21) Application number: 24306910.1
(22) Date of filing: 15.11.2024
(51) Int. Cl.: G06F 13/22, G06F 13/24, G06F 13/37, G06F 13/42, H04L 12/40, H04L 12/403, H04L 12/423

(54) **TRIGGERED POLLING IN DAISY-CHAINED DEVICES, SYSTEM, DEVICES AND METHOD**

(71) Applicant: STMicroelectronics International N.V., 1228 Plan-les-Ouates, Geneva (CH)
(72) Inventor: Mellot, Pascal, 38250 Lans en Vercors (FR); Dargan, Kenneth, Edinburgh EH 127PP (GB); Hearn, Brent, East Calder EH53 0DY (GB); Hristova, Ivelina, Edinburgh EH8 9QS (GB)
(74) Representative: Casalonga

(57) **Abstract**

A digital communication system (1) comprises a master device (2) and a plurality of slave devices (4). The master and slave devices are, in operation, communicatively coupled over a communication bus (5) and also coupled together in a daisy-chain configuration using a separate line. A daisy-chain input (DC_IN) of a subsequent device is coupled to a daisy-chain output (DC_OUT) of a previous device in the daisy-chain configuration. Any slave device (4) propagates an interrupt value at their daisy-chain input to their daisy-chain output. In a case of a local interrupt event (99), a slave device (4) changes its daisy-chain output from an operating value to the interrupt value. The master device, responsive to detecting a change of its daisy-chain input (FB_IN) into the interrupt value, triggers a sequential polling of all the slave devices, from the last one to the first one, for feedback collection using the communication bus.

## Description

### TECHNICAL FIELD

The present disclosure relates to a feedback system and method in a digital communication interface, in particular in a serial interface, more in particular operating according to the I2C (Inter-Integrated Circuit) protocol.

### BACKGROUND

Digital communication interfaces are commonly used, for example in embedded systems, to implement digital communication between at least one master or host or controller device (e.g., a digital processor) and a number of slave devices or controlees (e.g., sensor devices, such as Time-of-Flight sensors, Imaging sensors, Ambient Light sensors, and so on.) coupled to a same digital communication bus or line and which may individually be addressed by the master device.

Each slave device is provided with a unique address, to allow the master device to properly address data communication towards the same slave device.

Publication EP4075288A1 discloses a digital communication system having a daisy chain arrangement of the master and slave devices to perform an address assignment procedure. An iterative loop conducted by the master device allows all slave devices of the system to be assigned different dynamic addresses.

To get the feedback from the slave devices, the master device polls the slave devices over the digital communication bus using a round robin approach. However, a continual round robin polling means the bus is continually busy and leads to slow response times.

There is therefore a need for enhanced digital communication systems that offer a more efficient use of their digital communication bus.

### BRIEF SUMMARY

Rather than having a round robin polling continuously performed for the case where a slave device has feedback to provide, it is proposed to use the daisy chaining or daisy-chain loop (that is separate from the data communication bus) to propagate a signal triggering the polling when needed only. As a result, the digital communication bus is solicited less often, hence is idle more often for other communications than feedback polling.

In this context, it is proposed a digital communication system, comprising:
a master device; and
a plurality of slave devices, which, in operation, are communicatively coupled with the master device over a shared data communication bus,
wherein the master and slave devices are coupled together in a daisy-chain configuration, wherein a daisy-chain input of a subsequent device is coupled to a daisy-chain output of a previous device in the daisy-chain configuration, and the slave devices are configured to propagate an interrupt value at their daisy-chain input to their daisy-chain output,
wherein a slave device in operation where its daisy-chain output is set to an operating value is configured, in a case of a local interrupt event, to change its daisy-chain output to the interrupt value,
wherein the master device is configured, responsive to detecting a change of its daisy-chain input into the interrupt value, to poll the slave devices for feedback collection using the shared data communication bus.

Thanks to the polling triggered through the daisy-chain line, the master device can sequentially collect the feedback from the slave devices, only when one of the slave devices has indeed some feedback. The trigger occurs when the master device, in operation, has its daisy-chain input changed from the operating value to the interrupt value due to the daisy-chain output of the last slave device in the chain.

Correspondingly, it is proposed a master device communicatively coupled with a plurality of slave devices over a shared data communication bus, the master and slave devices being coupled together in a daisy-chain configuration, the master device being configured, responsive to detecting a change of a daisy-chain input of the master device into an interrupt value, to poll the slave devices for feedback collection using the shared data communication bus.

Also, it is proposed a slave device communicatively coupled with a master device over a shared data communication bus, the master and slave device being coupled in a daisy-chain configuration together with one or more other slave devices, the slave device being configured, in a case of a local interrupt event, to change a daisy-chain output of the slave device from an operating value to the interrupt value, and configured to propagate an interrupt value at a daisy-chain input of the slave device to the daisy-chain output.

Corresponding methods are also proposed, including a communication method in a digital communication system comprising a master device and a plurality of slave devices, which, in operation, are communicatively coupled with the master device over a shared data communication bus, the master and slave devices being also coupled together in a daisy-chain configuration, wherein a daisy-chain input of a subsequent device is coupled to a daisy-chain output of a previous device in the daisy-chain configuration. The method comprises the following steps:
at an interrupt slave device, changing its daisy-chain output to an interrupt value in response to a local interrupt event,
at slave devices downstream the interrupt slave device along the daisy chaining, propagating the interrupt value received at their daisy-chain input to their daisy-chain output, and
at the master device, responsive to detecting a change of its daisy-chain input into the interrupt value, polling the slave devices for feedback collection using the shared data communication bus.

In embodiments, the polling for feedback collection is sequentially conducted from the last slave device in the daisy chaining to the first slave device in the daisy chaining. A continual round robin polling is therefore operated, that is in the reverse direction to the daisy-chain direction.

In particular embodiments, the polling of the slave devices is stopped upon detecting a slave device having its daisy-chain output set to the operating value. Indeed, a daisy-chain output means that there is no interrupt slave device upstream in the daisy-chain configuration. This avoids polling all the slave devices, hence saves bus resources.

In some embodiments, polling a slave device includes reading a data ready status from the slave device and in case the data ready status indicates a first value, reading a feedback register of the slave device, otherwise not reading the feedback register. An efficient two-stage reading is performed to avoid the costly reading of the register in case no feedback is buffered.

In particular embodiments, the data ready status and a status of the daisy-chain output of the slave device are combined within one and the same register. This configuration allows a single read command to be sent by the master device to gather both information items. Alternatively, they may be provided through two separate registers.

In some embodiments, the polling for feedback collection is conducted by traversing the slave devices along the daisy-chain configuration using a dichotomy approach that is based on a value of the daisy-chain output of the traversed slave device. This is an efficient way not to poll each and every slave device. Indeed, as a daisy-chain output means that there is no interrupt slave device upstream in the daisy-chain configuration, its value at the traversed slave device allows the master device to determine whether the interrupt slave device is upstream or downstream the traversed slave device. This approach works well in case a single slave device emits an interrupt signal.

In some embodiments, the polling for feedback collection is conducted from all the slave devices.

In some embodiments, responsive to the polling of a slave device by the master device, the slave device resets its daisy-chain output to the operating value. This allows the daisy-chain to be gradually reset upon polling of the slave devices. At the end, all the slave devices are back to operation with their daisy-chain output set to the operating value. Furthermore, this gradual reset allows any already-polled slave device to properly handle a subsequent interrupt event, even in a case where the master device still has some slave devices to poll due to a previous interrupt event.

### BRIEF DESCRIPTION OF THE DRAWINGS

Other advantages and characteristics of the invention will become apparent from the detailed description of the non-limiting embodiment and implementations and from the appended drawings in which:
[Fig.1] ;
[Fig.2] ;
[Fig.3A] ;
[Fig.3B] ;
[Fig.4A] ;
[Fig.4B] ;
[Fig.4C] ;
[Fig.4D] ;
[Fig.5A] ;
[Fig.5B] ; and
[Fig.6] schematically illustrate embodiments and implementations of the invention.

### DETAILED DESCRIPTION

As will be discussed in detail, the present disclosure provides a way for multiple (even identical) slave devices on a same communication bus to be polled when needed by taking advantage of a daisy chain arrangement advantageously adopted for a dynamic-addressing initialization phase that is preliminary to data communication.

A digital communication system comprises a master device and a plurality of slave devices. The master and slave devices are, in operation, communicatively coupled over a communication bus and also coupled together in a daisy-chain configuration using a separate line. A daisy-chain input of a subsequent device is coupled to a daisy-chain output of a previous device in the daisy-chain configuration. Any slave device propagates an interrupt value at their daisy-chain input to their daisy-chain output. In a case of a local interrupt event, a slave device changes its daisy-chain output from an operating value to the interrupt value. The master device, responsive to detecting a change of its daisy-chain input into the interrupt value, triggers a sequential polling of all the slave devices, from the last one to the first one, for feedback collection using the communication bus.

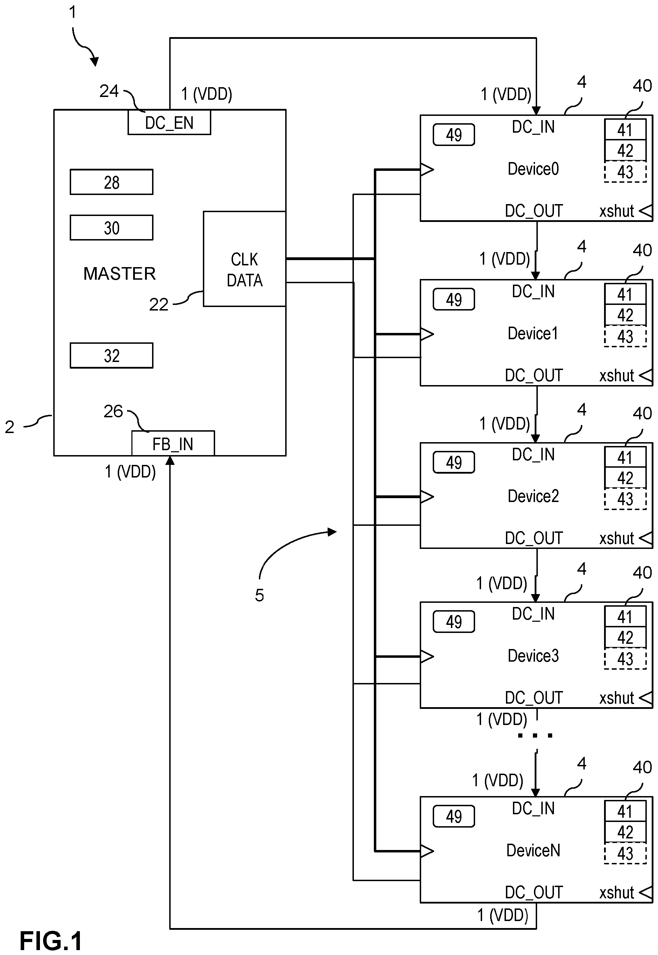

As shown in FIG. 1 a digital system 1 comprises a master (or host) device 2, which communicates with a number of slave devices 4 (in the example N, denoted as Device0-DeviceN) over a digital communication bus 5 (in the example operating according to the I3C protocol), including a data communication line DATA (for bidirectional data communication between the slave and master devices) and a clock line CLK (carrying a clock signal for synchronization). As illustrated, the master device 2 includes an interface 22, which, in operation, couples to the communication bus 5, one or more processing cores 28, one or more memories 30 and one or more state machines 32.

The slave devices 4 are arranged, by the master device 2, according to a dedicated daisy-chain (or series) arrangement, each slave device 4 having a daisy-chain input DC_IN and a daisy-chain output DC_OUT. DC_IN and DC_OUT may each be implemented through a single pin or gpio (general-purpose input/output), that is different from the known xshut pin or wiring (which works like an on/off switch).

The daisy-chain input DC_IN of a slave device 4 is generally coupled to the daisy-chain output DC_OUT of the previous device in the daisy chain arrangement, with the exception of the daisy-chain input DC_IN of the first slave device 4 (in the example, Device0), which is coupled to a daisy-chain enabling output DC_EN 24 of the master device 2 and the daisy-chain output DC_OUT of the last slave device 4 (in the example, DeviceN) which is coupled to a daisy-chain feedback input FB_IN 26 of the same master device 2,. In other words, the daisy chain input is provided by the master device 2 and the last daisy chain output is sent back to the same master device 2, as a feedback, thereby forming a loop. This defines a daisy-chain direction from a previous device to a next device, from which "upstream" with respect to a given slave device means all the preceding devices in the daisy chain while "downstream" designates all the next devices in the daisy chain.

It is noted that the daisy-chain input DC_IN of the slave devices 4 may correspond to a generally available set address (SA) input o pin, an input used in known solutions to provide setting of a static address of the same slave devices 4 (for example of a most significant bit of the same static address).

In a dynamic-addressing initialization phase, the daisy-chain output DC_OUT of a slave device 4 can be used to allow setting of the dynamic address of a following slave device 4 in the daisy chain arrangement. As the dynamic address assignment procedure is not the core of the present disclosure, it is not described beyond the features useful for the disclosure. Reference to EP4075288A1 is made for any further details.

During the dynamic address assignment procedure, the daisy-chain enabling output DC_EN of the master device 2 is set to '1' (digital high) or to a fixed value connected to an internal power supply voltage (VDD), in order for the master device 2 to set a dynamic address to the first slave device 4 (Device0) in the chain, with daisy-chain input DC_IN connected to the daisy-chain enabling output DC_EN.

Once the dynamic address for the first slave device Device0 has been assigned, the daisy-chain output DC_OUT of the same first slave device is driven to a high value '1' (digital high), so that the next slave device 4 in the chain (in this case the second slave device, Device1) has its daisy-chain input DC_IN set to '1', in order for the master device 2 to set a dynamic address to the second slave device 4 (Device1).

By doing this in an iterative loop, all slave devices 4 can be assigned different dynamic addresses. They are now addressable by the master device 2 through the communication bus 5.

Once all slave devices 4 have been assigned different dynamic addresses, they are in operation for communication, with all their daisy-chain input DC_IN set to '1' (or `VDD') as illustrated in FIG.1. This value of the daisy-chain input DC_IN is an `operating value' as it mirrors an operating state of the slave device for communication over the communication bus 5.

According to an aspect of the present disclosure, the daisy-chain output DC_OUT of the slave devices 4 may correspond to an interrupt output, used in normal operations to communicate interrupts from the slave devices 4 to the master device 2 and/or to other slave devices 4. In other words, the slave devices 4 are configured, in a case of a local interrupt event, to change their daisy-chain output DC_OUT from the operating value '1' (or `VDD') to an interrupt value, e.g. '0' (or 'GND' for the electrical ground). A logic 49 may be dedicated to that end. For instance, a processor in the slave device 4 provides an internal INTERRUPT signal to the logic 49. In normal operation, the INTERRUPT signal is low '0' (or `GND'). In a case where a local interrupt event occurs, the processor sets the INTERRUPT signal to a high value '1' (or `VDD'). The INTERRUPT signal is then processed by the logic 49 to set the daisy-chain output DC_OUT to the interrupt value '0'.

Any type of local interrupt event may be contemplated, including hardware and software failures. In case of local interrupt, the concerned slave device 4 needs to report (feedback) to the master device 2.

To that end, the slave devices 4 comprises a first register 41 - referred to as Status register or Data Ready register or Interrupt register - to store an indication that a local interrupt occurred, and a second register 42 - referred to as Data register - to store the feedback to report to the master device 2. By "register", it is meant any dedicated component inside the device for storing information, such as a buffer, a memory, pairs of bits, and so on. The feedback for an interrupt may be an error status or code or message, e.g. identifying the type of interrupt.

The registers are stored in memory 40 of the slave devices 4.

According to an aspect of the present disclosure, the slave devices 4 also include a logic 49 to propagate an interrupt value at their daisy-chain input DC_IN to their daisy-chain output DC_OUT. Thanks to the daisy-chain arrangement, this logic 49 in each slave device allows an interrupt to be propagated from any interrupt slave device to the next one up to the master device 2.

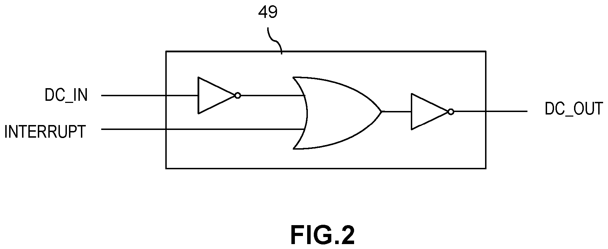

FIG.2 illustrates a simplified exemplary logic 49. It receives as inputs the INTERRUPT signal from an internal processor and the daisy-chain input DC_IN. The daisy-chain input DC_IN is inverted to propagate an interrupt in a previous slave device as a '1' signal.

Inverted DC_IN and the INTERRUPT signal are combined through an OR gate, to ensure that any of an interrupt in a previous slave device and a local interrupt event makes the output of the OR gate to '1'. The output of the OR gate is inverted and fed to the daisy-chain output DC_OUT.

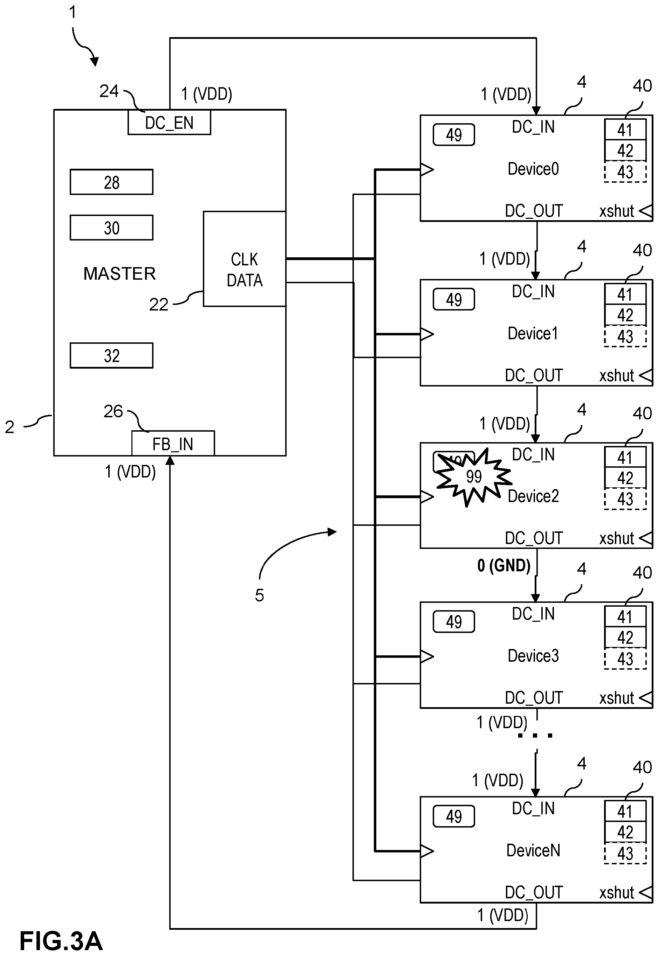

In operation, when a slave device 4 - below the "interrupt slave device" - (in this case the third slave device, Device2) experiences an interrupt event 99, its INTERRUPT signal goes to high. Accordingly, the logic 49 changes the daisy-chain output DC_OUT from the operating value '1' to the interrupt value `0', as shown in FIG.3A, so that the next slave device 4 in the chain (in this case the fourth slave device, Device3) sees its daisy-chain input DC_IN becoming '0'.

In operation, when the next slave device 4 (Device3) receives a 0 in its daisy-chain input DC_IN, its logic 49 changes the daisy-chain output DC_OUT from the operating value '1' to the interrupt value `0', so that the next slave device 4 in the chain (in this case the fifth slave device) sees its daisy-chain input DC_IN becoming `0'.

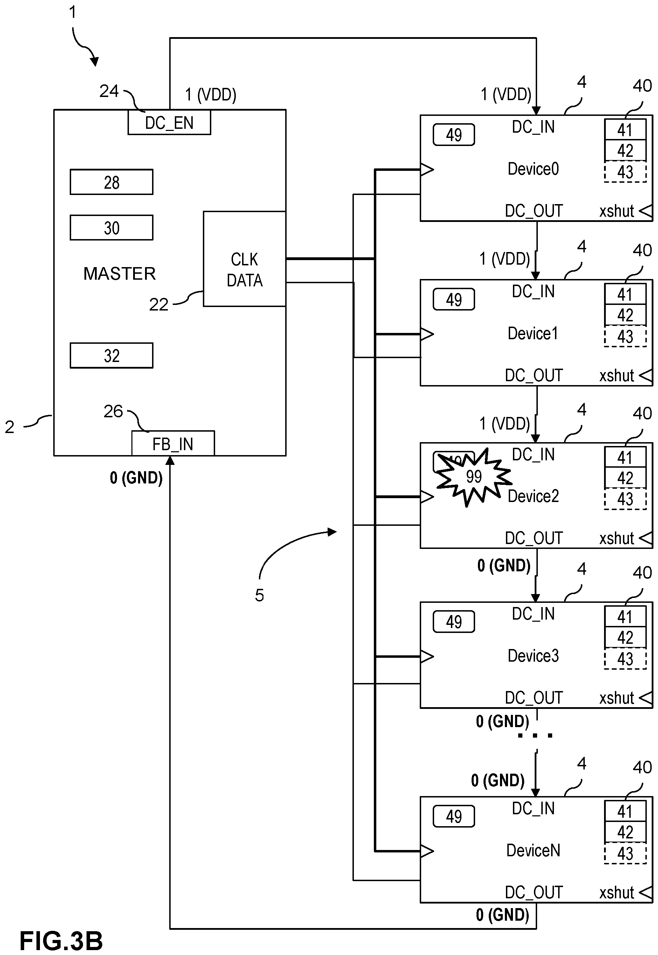

Thanks to this hop-by-hop propagation of the interrupt signal, all the slave devices 4 downstream the interrupt slave device up to the master device 2 have their daisy-chain input DC_IN and daisy-chain output DC_OUT in the low state ('0' or `GND'). As shown in FIG.3B, the daisy-chain feedback input FB_IN of the master device 2 becomes '0' due to the daisy-chain output DC_OUT of the last slave device (DeviceN), thereby signalling an interrupt occurred in at least one slave device it manages.

Responsive to detecting such a change at its daisy-chain feedback input, the master device 2 triggers a polling of its slave devices 4 for feedback collection using the communication bus 5.

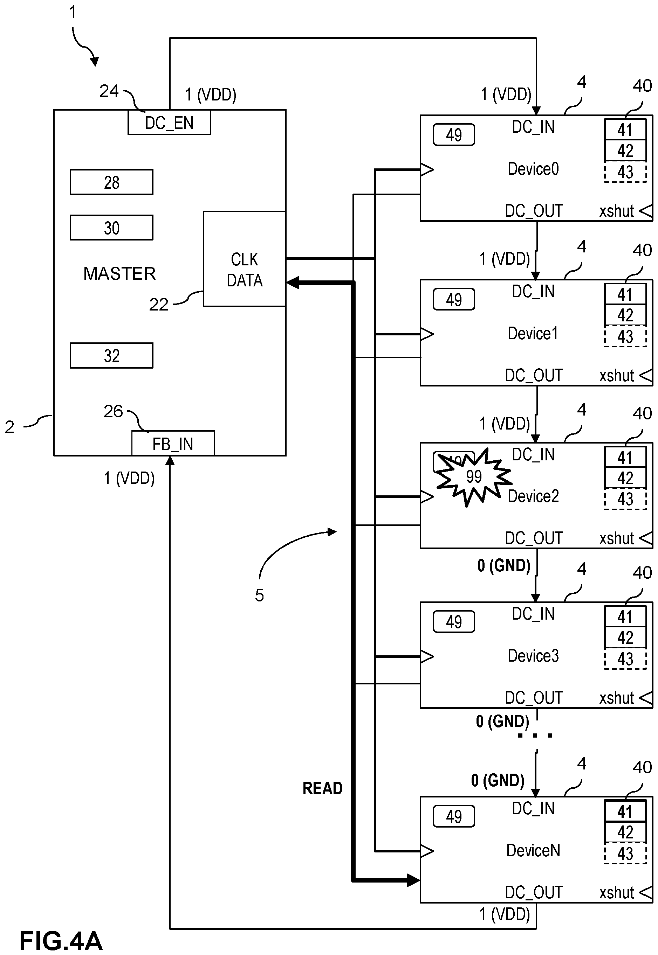

As shown in FIG.4A to FIG.4D, the master device 2 performs a round robin polling of the slave devices 4 wherein the polling for feedback collection is sequentially conducted from the last slave device DeviceN in the daisy chaining to the first slave device Device0 in the daisy chaining.

First, the master device 2 reads the Status register 41 of the last slave device 4, DeviceN, over the communication bus 5, using a read command and the dynamic address allocated to DeviceN during the dynamic-addressing initialization phase.

As the Status register 41 of DeviceN reveals no interrupt event at the slave device, the master device 2 does not read the Data register 42 and can skip to the next slave device to be polled.

Simultaneously, in response to the polling by the master device 2, the slave device DeviceN resets its daisy-chain output DC_OUT to the operating value '1'. This is to reestablish normal operation at the slave device, as well as the other devices downstream.

The reset may be responsive to the above read command to read the Status register 41. In a variant, the master device 2 may send a reset command at the end of the polling, to the effect for the polled slave device to reset its daisy-chain output DC_OUT.

In embodiments, the slave device DeviceN activates a locking of its daisy-chain output DC_OUT to keep the operating value '1' resulting from the polling until the daisy-chain input DC_IN becomes again '1'. A software locker (not shown) may be implemented.

Also, the master device 2 may reset its daisy-chain feedback input FB_IN to '1' in order to be ready to receive any new interrupt signal from the daisy-chained slave devices 4. The reset at the master device 2 may be performed once the first slave device has been polled, or in a variant before such polling in which case FB_IN is locked to '1' until the daisy-chain output DC_OUT of the first slave device becomes '1'.

The master device 2 performs the same operations with the next slave device to be polled, i.e., the previous slave device in the daisy chain. Once the previous slave device (DeviceN-1) resets its daisy-chain output DC_OUT to the operating value '1', the daisy-chain input DC_IN of already-polled DeviceN becomes again '1', thereby releasing the DC_OUT locking at DeviceN.

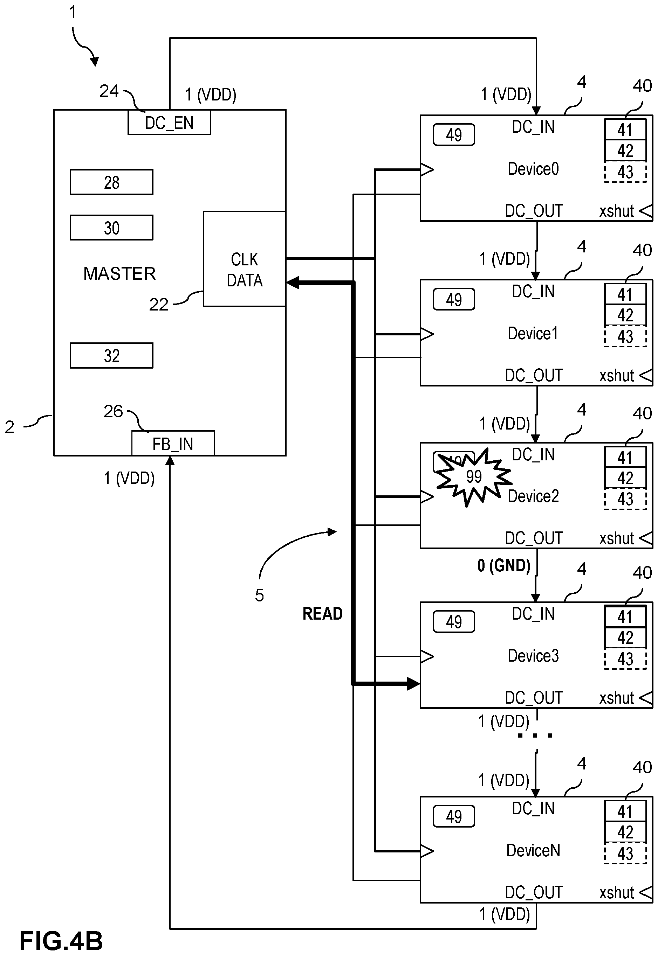

The operations are iteratively repeated until Device3 has been polled and revealed no interrupt event at Device3. This corresponds to the state shown in FIG.4B.

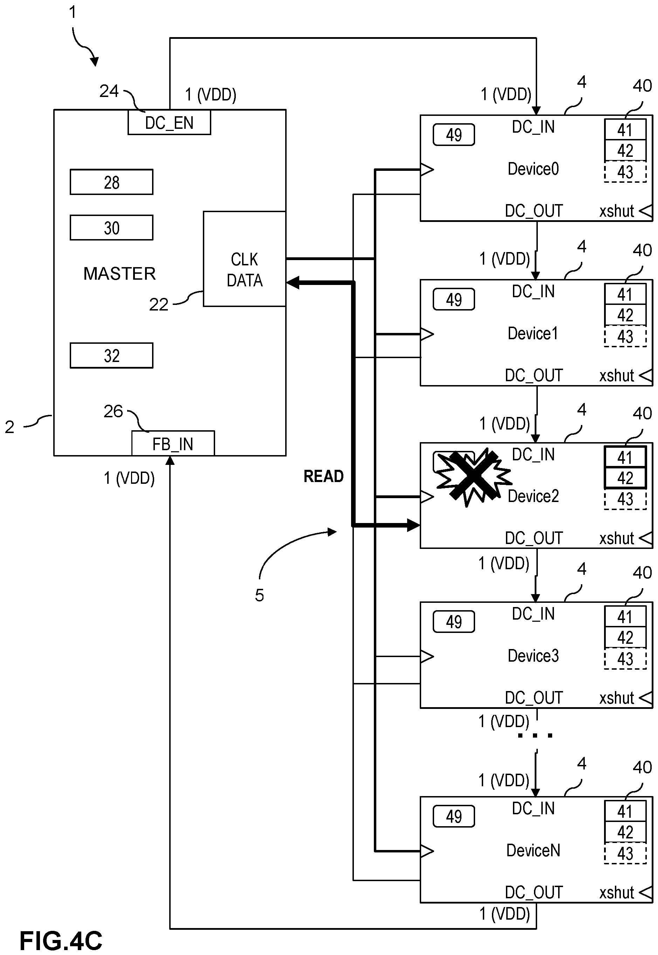

The next slave device to poll is Device2 which is the interrupt slave device. As shown in FIG.4C, the master device 2 first reads the Status register 41 of Device2, over the communication bus 5, using a read command and the dynamic address allocated to Device2 during the dynamic-addressing initialization phase.

As the Status register 41 of DeviceN reveals an interrupt event at Device2, the master device 2 reads the Data register 42 of Device2 over the communication bus 5, using another read command and Device2's address.

In that way, the master device 2 collects the feedback from Device2.

Device2 resets its daisy-chain output DC_OUT to the operating value '1', thereby removing the interrupt event 99 and releasing the DC_OUT locking at Device3. Also, as its daisy-chain input DC_IN is already '1', the daisy-chain output DC_OUT at Device2 is not locked, even temporarily.

Furthermore, as a response to the reading of the Data register 42, Device2 may reset internally the INTERRUPT signal to a low value '0' (or `GND'), to be ready to detect any new local interrupt event.

In embodiments, the master device 2 may stop its round robin polling at the first interrupt slave device it found. This may apply in situations where two slave devices cannot be interrupt slave devices at the same time; otherwise the master device 2 is liable to miss feedback from the other interrupt slave devices upstream.

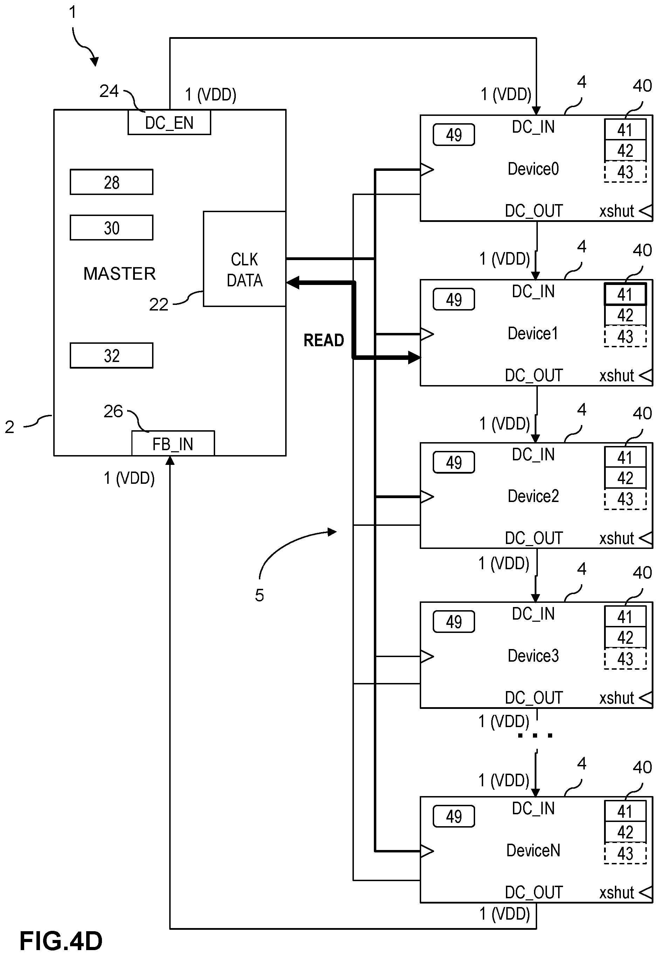

In other embodiments, the master device 2 continues the polling at each next slave device to be polled, here Device1 and then Device0. In that way the polling for feedback collection is conducted from all the slave devices. The continual polling is shown in FIG.4D for Device1. Similar as above, no interrupt event is revealed neither at Device1 nor at Device0. Their daisy-chain output DC_OUT is reset to the operating value '1' (which does not change their value). This ends the round robin polling. The digital system 1 has came back to the operating state of FIG.1 waiting for the next interrupt event.

In some embodiments, the slave devices 4 may also comprise, in memory 40, an additional register 43 - referred to as DC_OUT register - that stores the state of the daisy-chain output DC_OUT. A logic or a software code at the slave device allows the DC_OUT register 43 to permanently mirror the state of the daisy-chain output DC_OUT. A one-bit register taking value '0' for a daisy-chain output DC_OUT equal to `0', and taking value '1' for a daisy-chain output DC_OUT equal to '1' may be used.

In these embodiments, the master device 2, when polling a slave device, may also read the DC_OUT register 43, either prior to the Status register 41, or simultaneously, or after. In particular embodiments adapted for a simultaneous reading, the Status register 41 and the DC_OUT register 43 are combined within one and the same register, e.g. as two separate subparts (e.g., two bits) of a multi-bit register.

As apparent from FIG.3B, the DC_OUT register 43 allows to distinguish between slave devices upstream the interrupt slave device (Device0 and Device1 have their DC_OUT register 43 to '1') and slave devices downstream the interrupt slave device (Device2, Device3 to DeviceN have their DC_OUT register 43 to '0').

As long as the master device 2 is polling DeviceN to Device 2, it reads their DC_OUT register 43, thereby knowing that it is downstream the interrupt. When come the polling of Device1 (FIG.4D), the reading of its DC_OUT register 4d3 reveals to the master device 2 that Device1 is the first slave device upstream the interrupt slave device, meaning Device2 is the interrupt slave device.

Thanks to the read DC_OUT register 43, the master device 2 can decide whether or not to continue the polling: if the DC_OUT register 43 of the polled slave device is `0', continue the polling; if the DC_OUT register 43 is '1', stop the polling. In other words, the polling of the slave devices may be stopped upon detecting a slave device having its daisy-chain output set to the operating value `1'.

The polling of all the slave devices advantageously allows feedback collection in case of plural interrupts.

The reading of the DC_OUT register 43 also allows feedback collection in case of plural interrupts.

Indeed, through the round robin polling the slave devices are progressively reset to operation while their feedback (if any) is collected. Thanks to the DC_OUT register 43, even if the master device 2 identifies an interrupt slave device, as Device2, it can continue polling the upstream slave devices because their DC_OUT registers are '0' due to an upstream interrupt. As an example, if Device0 is also an interrupt slave device, Device1 has its DC_OUT register set to '0' when polled by the master device 2 (corresponding to the case of FIG.4D where DC_OUT of Device1 should be `0', as well as DC_OUT of Device0). Hence, the master device 2 polls Device1 which reveals no interrupt event and resets its daisy-chain output DC_OUT to '1'. The master device then switches to Device0 from which it collects interrupt feedback as done for Device2 above. Device0 also resets its daisy-chain output DC_OUT to '1', to come back to the system state of FIG.1.

The proposed polling is also resilient to dynamic chained interrupts, i.e., when a new interrupt event occurs at a slave device 4 while the master device 2 is performing the round robin polling.

There is no difficulty to obtain the interrupt feedback from interrupt slave devices 4 placed upstream the slave device being currently polled, as apparent from above.

As far as the downstream slave devices are concerned, the polling direction (reverse to the daisy-chain direction) together with the resetting and delocking of their daisy-chain output DC_OUT ensure that they are ready to signal and propagate any new interrupt. Therefore, upon a downstream slave device having an interrupt, its daisy-chain output DC_OUT turns into `0', which is hop-by-hop propagated by the other downstream slave devices (if any) up to the master device 2 at its daisy-chain feedback input FB_IN.

Once the master device 2 ends the polling it is currently performing on the upstream slave devices, it detects that its daisy-chain feedback input FB_IN is set to the interrupt value '0' instead of the operating value '1'. This triggers a new polling round as described above.

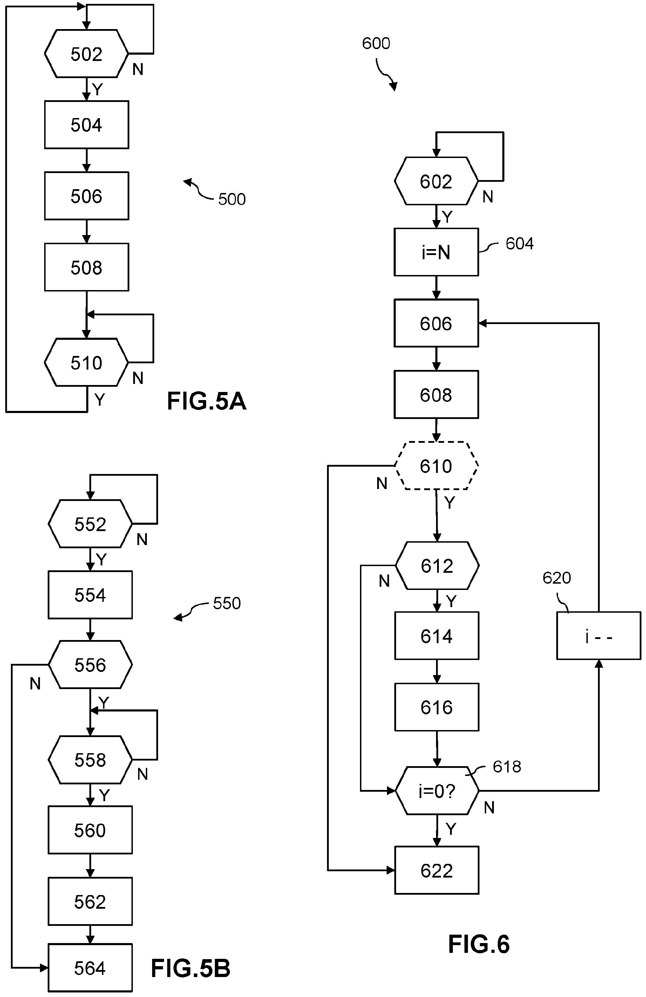

FIG.5A illustrates, using flowchart 500, operational steps at a slave device 4 to process a local interrupt event. In particular, through this method, at an interrupt slave device, its daisy-chain output DS_OUT is changed to an interrupt value '0' in response to a local interrupt event.

At step 502, the slave device 4 determines whether an interrupt event is locally detected or not. Multiple reasons can trigger an interrupt event at the slave device, including the detection of a hardware failure or of a software failure.

Upon the interrupt event being detected, the slave device 4 sets its Status register 41 to a value signaling a local interrupt event. This is step 504.

Next at step 506, the slave device 4 stores corresponding feedback in the Data register 42. The feedback may be any message about the detected interrupt event, e.g., an error code.

Next, at step 508, the slave device 4 internally sets the INTERRUPT signal to a high value '1' (or `VDD'), thereby set its daisy-chain output DC_OUT to the interrupt value '0'.

At step 510, the slave device 4 waits for the INTERRUPT signal to come back to a low value `0', meaning the device is ready again to detect any new local interrupt event by looping back to step 502.

FIG.5B illustrates, using flowchart 550, operational steps at a slave device 4 to process a polling.

At step 552, the slave device 4 waits for a read command over the communication bus 5 from the master device 2 to read the Status register 41 and/or the DC_OUT register 43.

When such read command arrives, the slave device 4 executes it and replies with the content of the Status register 41 and/or the DC_OUT register 43, at step 554.

Depending on the content of the Status register 41 mirroring an existing local interrupt event at the slave device (test 556), the slave device 4 knows whether it expects to receive another read command from the master device 2.

In case of no local interrupt event (outcome "N"), the process continues at step 564.

In case of local interrupt event (outcome "Y"), at step 558, the slave device 4 waits for a read command over the communication bus 5 from the master device 2 to read the Data register 42.

When such read command arrives, the slave device 4 executes it and replies with the content of the Data register 42, at step 560.

Next, at step 562, the slave device resets the INTERRUPT signal to a low value '0' (or `GND'), to be ready to detect any new local interrupt event. Nest step is step 564.

At step 564, the slave device 4 resets its daisy-chain output DC_OUT to the operating value '1'.

FIG.6 illustrates, using flowchart 600, operational steps at the master device 2 to poll the slave devices 4.

First, at step 602, the master device 2 waits for a signal to trigger the polling of the slave devices. In embodiments, the signal is the setting of its daisy-chain feedback input FB_IN to low value '0' due to the daisy-chain output DC_OUT of the last slave device in the daisy chain. Through this step, the master device, responsive to detecting a change of its daisy-chain input FB_IN into the interrupt value `0', triggers polling the slave devices for feedback collection using the shared data communication bus 5.

When it happens, a variable 'i' representing the index of the slave device being polled is initiated to N (N+1 being the number of slave devices as shown in FIG.1), at step 604.

At step 606, the master device 2 sends a read command to slave device 'i' over the communication bus 5 in order to read the Status register 41 and/or the DC_OUT register 43 of that slave device.

At step 608, the master device 2 receives the response to the read command, i.e., the content of the read register or registers.

At optional step 610, the master device 2 checks the read DC_OUT register 43: if the DC_OUT register 43 of the polled slave device is `0', the master device 2 continues the polling at step 612; otherwise, if the DC_OUT register 43 is '1', the master device 2 stops the polling of that slave device and of all slave devices, as mentioned above, and can process at step 622 the feedback or feedbacks already collected.

At step 612, the master device 2 checks the read Status register 41: if it reveals a local interrupt event at the polled slave device (outcome "Y"), the next step is step 614 where the master device 2 sends another read command to slave device 'i' over the communication bus 5 in order to read the Data register 42 that slave device.

At step 616, the master device 2 receives the response to the read command, i.e., the content of the read register. This feedback is stored in a memory of the master device 2 for further processing. Alternatively, the feedback may be immediately processed.

After step 616 or if no local interrupt event is revealed at step 612, the process checks whether all the slave devices have been polled by comparing 'i' to 0 (step 618). In the negative, the next slave device is selected by decrementing 'i' (step 620) before looping back to step 606. In the affirmative of step 618, the collected feedback or feedbacks are processed by the master device 2 at step 622

When the digital system 1 is enabled and all devices are running, the daisy-chain configuration allows pass through of key information along the daisy chain back to the master device via its single gpio-in port. The master device is then able to interrogate the slave devices of the daisy chain that report back through this mechanism. In enabling this low wiring use case the proposed disclosure leads to minimized area and master device ports, and in some particular use cases, the proposed disclosure reduces traffic over the communication bus 5 and may result in quicker response times from the master device to a final resultant action.

The above embodiments mainly disclose a polling approach that sequentially poll each device along the daisy chain.

For larger chains with more slave devices connected, however a "divide" search may appear more efficient.

In embodiments, a divide search may appear as follows: the polling for feedback collection is conducted by traversing the slave devices along the daisy-chain configuration using a dichotomy approach that is based on a value of the daisy-chain output DC_OUT of the traversed slave device.

To illustrate, the search - i.e. the first slave device to be polled - starts at the slave device in the middle of the chain (in case of an odd number of slave devices) or near the middle.

The master device 2 reads the DC_OUT register 43 of the slave device being polled, to find whether this slave device is upstream the interrupt slave device or downstream thereto (including the interrupt slave device). As mentioned above, this information can be used to decide whether to search for the interrupt slave device earlier or later in the chain, hence to drive the next stage of the search.

In the example of the Figures, assuming that Device3 is placed in the middle of the 7-device chain, it is first polled by the master device 2. The read DC_OUT register 43 signals Device3 is downstream the interrupt slave device.

The master device 2 can then repeat this process by assessing slave devices at half interval steps along the chain based on the read DC_OUT registers and on average can reduce the communication required to find the source device.

In the above example, the master device 2 continues by polling Device 1 (halfway between already-polled Device3 and last slave device Device0). By reading the DC_OUT register 43 of Device1, the master device identifies that Device 1 is upstream the interrupt slave device.

It can then skip to Device2 where the read DC_OUT register 43 reveals Device2 is downstream the interrupt slave device.

Given the outcome of the polling, the master device 2 infers that Device2 is the interrupt slave device.

This takes only three reads compared to reading all seven slave devices in a simple sequential search.

Once the interrupt slave device is identified, the master device 2 may read the content of its Data register 42, as described above.

Although the present disclosure has been described hereinabove with reference to specific embodiments, the present invention is not limited to the specific embodiments, and modifications will be apparent to a skilled person in the art which lie within the scope of the present invention.

## Claims

1. A digital communication system (1), comprising:
a master device (2); and
a plurality of slave devices (4), which, in operation, are communicatively coupled with the master device over a shared data communication bus (5),
wherein the master and slave devices are coupled together in a daisy-chain configuration, wherein a daisy-chain input (DC_IN) of a subsequent device is coupled to a daisy-chain output (DC_OUT) of a previous device in the daisy-chain configuration, and the slave devices are configured to propagate an interrupt value at their daisy-chain input to their daisy-chain output,
wherein a slave device (4) in operation where its daisy-chain output is set to an operating value is configured, in a case of a local interrupt event (99), to change its daisy-chain output to the interrupt value,
wherein the master device (2) is configured, responsive to detecting a change of its daisy-chain input (FB_IN) into the interrupt value, to poll the slave devices (4) for feedback collection using the shared data communication bus (5).

2. The digital communication system (1) of Claim 1, configured so that the polling for feedback collection is sequentially conducted from the last slave device in the daisy chaining to the first slave device in the daisy chaining.

3. The digital communication system (1) of Claim 2, configured so that the polling of the slave devices is stopped upon detecting a slave device having its daisy-chain output set to the operating value.

4. The digital communication system (1) of anyone of Claims 1 to 3, configured so that polling a slave device includes reading a data ready status from the slave device and in case the data ready status indicates a first value, reading a feedback register of the slave device, otherwise not reading the feedback register.

5. The digital communication system (1) of Claim 4, wherein the data ready status and a status of the daisy-chain output of the slave device are combined within one and the same register.

6. The digital communication system (1) of anyone of Claims 1 to 5, configured so that the polling for feedback collection is conducted by traversing the slave devices along the daisy-chain configuration using a dichotomy approach that is based on a value of the daisy-chain output of the traversed slave device.

7. The digital communication system (1) of anyone of Claims 1 to 6, configured so that the polling for feedback collection is conducted from all the slave devices.

8. The digital communication system (1) of anyone of Claims 1 to 7, configured so that responsive to the polling of a slave device by the master device, the slave device resets its daisy-chain output to the operating value.

9. A master device (2) communicatively coupled with a plurality of slave devices (2) over a shared data communication bus (5), the master and slave devices being coupled together in a daisy-chain configuration, the master device being configured, responsive to detecting a change of a daisy-chain input (FB_IN) of the master device into an interrupt value, to poll the slave devices for feedback collection using the shared data communication bus.

10. A slave device (4) communicatively coupled with a master device (2) over a shared data communication bus (5), the master and slave device being coupled in a daisy-chain configuration together with one or more other slave devices, the slave device being configured, in a case of a local interrupt event (99), to change a daisy-chain output (DC_IN) of the slave device from an operating value to the interrupt value, and configured to propagate an interrupt value at a daisy-chain input of the slave device to the daisy-chain output.

11. A communication method in a digital communication system (1) comprising a master device (2) and a plurality of slave devices (4), which, in operation, are communicatively coupled with the master device over a shared data communication bus (5), the master and slave devices being also coupled together in a daisy-chain configuration, wherein a daisy-chain input (DC_IN) of a subsequent device is coupled to a daisy-chain output (DC_OUT) of a previous device in the daisy-chain configuration, the method comprising the following steps:
at an interrupt slave device (4), changing (508) its daisy-chain output (DC_OUT) to an interrupt value in response to a local interrupt event (99),
at slave devices (4) downstream the interrupt slave device along the daisy chaining, propagating the interrupt value received at their daisy-chain input (DC_IN) to their daisy-chain output (DC_OUT), and
at the master device (2), responsive to detecting (602) a change of its daisy-chain input (FB_IN) into the interrupt value, polling (606, 614) the slave devices (4) for feedback collection using the shared data communication bus.
